# EUROPEAN PATENT SPECIFICATION

(11) **EP 3 944 768 B1**
(45) Date of publication and mention of the grant of the patent: **15.02.2023**
(21) Application number: 20464009.8
(22) Date of filing: 10.08.2020
(51) Int. Cl.: A23G 9/04, A23G 9/32, A23G 9/40, A23G 9/42

(54) **FUNCTIONAL ICE CREAM WITH LOW FAT CONTENT AND PROCESS FOR OBTAINING IT**
FUNKTIONELLES SPEISEEIS MIT NIEDRIGEM FETTGEHALT UND VERFAHREN ZU DESSEN HERSTELLUNG
CRÈME GLACÉE FONCTIONNELLE À FAIBLE TENEUR EN MATIÈRE GRASSE ET SON PROCÉDÉ D'OBTENTION

(30) Priority: 28.07.2020 RO 202000453
(43) Date of publication of application: 02.02.2022
(73) Proprietor: Stefan cel Mare University of Suceava, 720229 Suceava, County Suceava (RO)
(72) Inventor: Dabija, Adriana, 727371 jud. Suceava (RO); Codina, Georgiana Gabriela, 720011 jud. Suceava (RO); Sestac, Petrut-Mircea, 725300 jud. Suceava (RO)

(56) References cited:
- WO-A1-02/094035
- CN-A- 103 431 147
- CN-A- 103 478 394

## Description

The invention is about a frozen dairy dessert product, with the role of a functional food, of whose composition includes only natural ingredients: whey cheese (urdá), green walnut jam, walnut kernel oil, carrot fibers, without the addition of sugar or food additives and to a process for obtaining it.

Are known products of this category, obtained by freezing under special conditions, of a mixture containing, in general, milk and dairy products, sugar, fruit or fruit juices, flavoring and coloring substances, stabilizers and emulsifiers etc. [1-4]. The disadvantages of these products are that they have low functional properties caused by the addition of food additives in the recipe and presents high caloric content.

The process, according to the invention, eliminates these disadvantages and expands the range of frozen dairy dessert products, in that the, the mix for making ice cream is obtained from ingredients with multiple health benefits, does not contain sugar, can be consumed by people suffering from diabetes and obesity and even by those with lactose intolerance.

CN103478394A discloses whey cheese cream which comprise the following materials in percentage by weight: 35%-45% of whey cheese, 15%-20% of milk powder, 14%-18% of water, 10%-12% of butter, 9%-12% of white granulated sugar, 0.2%-0.5% of guar gum, 0.2%-0.4% of locust bean gum, 0.1%-0.5% of glycerol monostearate, 0%-0.5% of edible essence and 1%-2% of traditional Chinese medicine extracting liquid. A production process for the whey cheese ice cream comprises the following steps: preparing and sterilizing the raw materials, homogenising, cooling, ageing, flavouring, freezing, and forming and hardening to obtain a finished product [5].

CN103431147A discloses a kind of whey cheese ice cream with following formula: whey cheese 35%-45%, milk powder15%-20%, water 15%-20%, butter 10%-12%, white granulated sugar 9%-12%, guar gum 0.2%-0.5%, locust bean gum 0.2%-0.4%, single stearic acid glycerine lipoprotein 0.1%-0.5%, flavouring essence 0%-0.5%. A production process for the whey cheese ice cream comprises the following steps: batching and sterilization, homogenising, cooling, aging, blending, congelation, moulding, freezing and packaging finished product [6].

WO02/094035A1 relates to some aspects to an improved method for the preparation of fortified ice cream which is supplemented with macro-and/or micro-nutrients can retain favourable organoleptic properties. The methods utilize acidulants and other components such as high dextrose and/or other concentrated artificial or natural derived sweeteners, that way the finished product may be used by people suffering from diabetes [7].

The technical problem solved by the invention consists in the decrease of the lipid and lactose content of the product and by the increase of the protein content of a valuable quality for the human body by using whey cheese (urdǎ) as a dairy product in the ice cream mix and obtaining a product without added sugar by using apple juice in the manufacturing recipe of the green walnut jam.

The obtain of the product, according to the invention, consists in obtaining the ice cream mix from whey cheese (urdä), green walnut jam, walnut kernel oil, carrot fibers, which are mixed, in a vat provided with a stirrer and a heating system. After pasteurization, homogenization and cooling, the ice cream mixture is partially frozen in a freezer at -6°C temperature. The frozen ice cream is dosed, packed in corrugated cardboard box and is hardened by freezing to -20... 25°C for 20 minutes.

The application of the invention leads to the following advantages:
- obtaining an assortment of ice cream that can be consumed by people suffering from diabetes, obesity, because sugar is not used to obtain this frozen dairy dessert, it being replaced with the natural sugar from the concentrated apple juice used in the manufacturing recipe of the green walnut jam;
- obtaining an assortment of ice cream with a low fat and lactose content and with an increase of the protein content of a valuable quality for the human body by using whey cheese (urdä) as a dairy product in the ice cream mix; the protein content from the whey cheese (urdǎ) are quickly evacuated from the stomach and transits intact, which helps preserve bioactivity in the intestines. Also, these proteins have a higher amount of essential amino acids content, especially sulphur amino acids (cysteine, methionine) which increases their biological value;
- obtaining an assortment of ice cream fortified with valuable compounds from green walnuts and walnut kernel oil, as follows: iodine content helps maintain healthy stomach and liver, contributes to the blood purification; vitamins A, E, F, C, B complex, along with minerals such as phosphorus, calcium, iron, selenium, zinc, potassium are the elements that makes nuts the best food for the brain with immunostimulatory properties; the active substances present in the green walnuts content have positive effects in neurological disorders, regulates blood cholesterol levels, blood pressure, reduce the risk of heart attack and strengthen the blood vessels [2,3].

The present invention discloses a functional ice cream with low fat content, characterized in that, for 100 kg finished product are necessary the following raw materials: an amount of 50 kg of whey cheese (urdã) from pasteurized cow's milk with 6% fat, an amount of 40 kg green walnut jam with 71.8% carbohydrates, an amount of 4 L walnut kernel cold-pressed oil with 100% lipids, an amount of 5 L lemon juice and an amount of 1 kg carrot fibers.

The present invention also discloses a process for obtaining ice cream with low fat content as disclosed above, characterized in that, it consists in making the ice cream mix from raw materials which are introduced into a double walled vat, under stirring, firstly walnut kernel oil and lemon juice are mixed for 10 minutes, then the whey cheese (urdä) and the green walnut jam previously homogenized and the carrot fibers, the mix obtained is pasteurized in the same double walled vat, to temperature of 68°C, for 30 minutes, homogenized, cooling and maturation process to 4°C temperature, maintained at this temperature for maturation for 3 h, freezing process, to -6°C temperature, dosed and packed in corrugated cardboard boxes of 100 g, followed by the deep-frozen process to -25°C temperature for 25 minutes, stored to at least -18°C temperature, functional ice cream with low fat content having a 30.67% carbohydrates, 7.15% lipids, 6.19% protein and 1% fibers.

Is given, bellow, an example of obtaining of the functional ice cream with low fat content according to the invention.

To obtain 100 kg of functional ice cream with low fat content are necessary the following ingredients: 50 kg of whey cheese (urdä) from pasteurized cow's milk with 6% fat, 40 kg green walnut jam with 71.8% carbohydrates, 4 L walnut kernel cold-pressed oil with 100% lipids, 5 L lemon juice and 1 kg carrot fibers.

To obtain the ice cream is applied a process, which includes the following technological operations: making the ice cream mix from the 50 kg sweet whey cheese (urdǎ) from pasteurized cow's milk with 6% fat content, 40 kg of green walnut jam with 71.8% carbohydrates, 4 L walnut kernel cold-pressed oil with 100% lipids, 5 L lemon juice and 1 kg carrot fibers. To obtain a uniform distribution of the mix components, they are introduced into a double walled vat, under stirring, in the following order: walnut kernel oil and lemon juice are mixed for 10 minutes, then the whey cheese (urdǎ) and the green walnut jam previously homogenized and the carrot fibers. The mix obtained is pasteurized in the same double walled vat, the thermal agent being the hot water, to temperature of 68°C, for 30 minutes, in order to destroy any pathogenic microorganisms and to improve the technological quality of the finished product, by favoring the transition to solution of some components for obtaining a product with a uniform structure. After pasteurization, the ice cream mix is homogenized in order to obtain a stable fat emulsion, the finished product presents an fine appearance, velvety structure. The homogenized mixture is subjected to the cooling and maturation process to 4°C temperature, in the same double walled vat, using cooling water and is maintained at this temperature for maturation for 3 h, in order to obtain a finished product with a fine structure in order to reduce the melting speed. The matured ice cream mixture is subjected to the freezing process, to -6°C temperature, for the partial freezing of the water from the mixture and the simultaneous incorporation of air into the freezer by whipping. The obtained frozen mixture, with a plastic structure, is dosed and packed in corrugated cardboard boxes of 100 g. After packing, the deep-frozen process is performed, through which a significant level from the water present in the ice cream composition is frozen, in order to store and increase the melting resistance. The deep-frozen is carried out to -25°C temperature for 25 minutes in order to avoid the formation of large ice crystals. The ice cream is stored to at least -18°C temperature, without variations of the temperature from the storage air, in order to avoid the recrystallization phenomenon.

The product, according to the invention, by its composition, is a complete functional food, with a high content of proteins, vitamins A, E, F, C, complex B, carotenoids, mineral substances, trace elements and presents a high biological value. The functional ice cream with low fat content contains 30.67% carbohydrates, 7.15% lipids, 6.19% protein and 1% fibers.

The process for obtaining the functional ice cream with low fat content, according to the invention, can be reproduced with the same characteristics and performances whenever is necessary, which is an argument in order to comply with the criterion of industrial applicability.

### BIBLIOGRAPHICAL REFERENCES

1. Banu, C., et al., Everything about ice cream, Tehnicä Publishing House, Bucharest, 1993
2. Banu, C., et al., Handbook of food industry, ASAB Publishing House, Bucharest, 2009
3. Banu, C., et al., Functional foods, food supplements and herbs, ASAB Publishing House, Bucharest, 2010
4. Douglas Goff, H., Hartel, R., Ice Cream, Springer New York Heidelberg Dordrecht London,2013
5. Lu Yaxiang, Whey cheese ice cream and preparation method thereof, CN103478394A, patent, 2014
6. Ma Jianjun et al., Whey cheese ice cream and preparation method thereof CN103431147A, patent, 2013
7. Koss Ronald & Koss Arnold, Nutritional frozen dessert and methods of manufacture, WO02094035A1, patent, 2002

## Claims

1. Functional ice cream with low fat content, **characterized in that,** for 100 kg finished product are necessary the following raw materials: an amount of 50 kg of whey cheese (urdǎ) from pasteurized cow's milk with 6% fat, an amount of 40 kg green walnut jam with 71.8% carbohydrates, an amount of 4 L walnut kernel cold-pressed oil with 100% lipids, an amount of 5 L lemon juice and an amount of 1 kg carrot fibers.

2. Process for obtaining ice cream with low fat content, according to the claim 1, **characterized in that,** it consists in making the ice cream mix from raw materials which are introduced into a double walled vat, under stirring, firstly walnut kernel **oil** and lemon juice are mixed for 10 minutes, then the whey cheese (urdǎ) and the green walnut jam previously homogenized and the carrot fibers, the mix obtained is pasteurized in the same double walled vat, to temperature of 68°C, for 30 minutes, homogenized, cooling and maturation process to 4°C temperature, maintained at this temperature for maturation for 3 h, freezing process, to -6°C temperature, dosed and packed in corrugated cardboard boxes of 100 g, followed by the deep-frozen process to -25°C temperature for 25 minutes, stored to at least -18°C temperature, functional ice cream with low fat content having a 30.67% carbohydrates, 7.15% lipids, 6.19% protein and 1% fibers.

## Patentansprüche

1. Funktionelles Speiseeis mit niedrigem Fettgehalt, **dadurch gekennzeichnet, dass** für 100 kg Fertigprodukt die folgende Rohstoffe benötigt werden: eine Menge von 50 kg Molkenkäse (urdä) aus pasteurisierter Kuhmilch mit 6 % Fett, eine Menge von 40 kg Grüne Walnussmarmelade mit 71,8 % Kohlenhydraten, eine Menge von 4 L kaltgepresstes Walnusskernöl mit 100 % Lipiden, eine Menge von 5 L Zitronensaft und eine Menge von 1 kg Karottenfasern.

2. Verfahren zur Herstellung von Speiseeis mit niedrigem Fettgehalt, nach Anspruch 1, dadurch charakterisiert, es besteht darin, die Eismischung aus Rohstoffen herzustellen, die unter Rühren in einen doppelwandigen Bottich eingeführt werden, Zuerst werden die Walnusskernöl und Zitronensaft für 10 Minuten gemischt, dann der Molkenkäse (urdä) und die vorher homogenisierte grüne Walnussmarmelade und die Karottenfasern, die erhaltene Mischung wird in demselben doppelwandigen Bottich pasteurisiert, auf eine Temperatur von 68°C für 30 Minuten, homogenisiert, gefolgt von einem Abkühlen und Reifungsprozess auf 4°C Temperatur, 3 Stunden zur Reifung bei dieser Temperatur gehalten, gefolgt von einem Gefrierprozess auf eine Temperatur von -6 °C, dosiert und verpackt in Kartonschateln zu 100 g, gefolgt vom Tiefkühlprozess auf -25°C Temperatur für 25 Minuten, bei mindestens -18°C Temperatur gelagert, funktionelles Eis mit niedrigem Fettgehalt mit einem Gehalt von 30,67 % Kohlenhydraten, 7,15 % Lipiden, 6,19 % Protein und 1 % Ballaststoffen.

## Revendications

1. Le crème glacée fonctionnelle à faible teneur en matière grasse, **caractérisé par le fait que,** pour 100 kg de produit fini, on a besoin des suivantes matières premières: une quantité de 50 kg de fromage ricotta (urdä) fabriqué de lait de vache avec 6% graisse, 40 kg confiture de noix avec 71.8% glucides, 4 L d'huile de noix pressé au froid avec 100% lipides, 5 L de jus de citron et une quantité de 1 kilo de fibres de carottes.

2. Le procédé d'obtention du crème glacée fonctionnelle à faible teneur en matière grasse, selon le revendication numéro 1, **caractérisé par le fait que,** réside dans le mélange des matières premières qui sont introduites dans une vanne double paroi, tout en agitant, premièrement on mélange l'huile de noix et le jus de citron pour 10 minutes, puis on y ajoute le fromage ricotta et la confiture de noix verts homogénéisés auparavant et les fibres de carottes, on pasteurise le mélange ainsi obtenu dans la même vanne à double paroi, à la température de 68°C, pour 30 minutes, on homogénéise, on laisse au froid et à la maturation à la température de 4°C, étant maintenu à cette température de maturation pour 3 heures, puis on congèle à la température de -6°C, on fait le dosage et on s'emballe dans des coupes en carton ondulé de 100 g, le processus de congelé jusqu'à la température de -25°C pour 25 minutes, on emmagasine à la température minimum de -18° C, le crème glacée fonctionnelle à faible teneur en matière grasse ayant 30.67% glucides, 7.15% lipides, 6.19% protéines et 1% fibres.
